(19) Europäisches Patentamt / European Patent Office / Office européen des brevets

(11) **EP 3 124 435 A1**

(12) **EUROPEAN PATENT APPLICATION**
published in accordance with Art. 153(4) EPC

(43) Date of publication:
**01.02.2017 Bulletin 2017/05**

(21) Application number: **15767784.0**

(22) Date of filing: **27.02.2015**

(51) Int Cl.:
*C01B 39/54* (2006.01)   *B01D 53/94* (2006.01)
*B01J 20/18* (2006.01)   *B01J 29/85* (2006.01)
*B01J 37/04* (2006.01)   *B01J 37/10* (2006.01)

(86) International application number:
**PCT/JP2015/055832**

(87) International publication number:
**WO 2015/146482 (01.10.2015 Gazette 2015/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **26.03.2014   JP 2014064053**

(71) Applicant: **Mitsubishi Plastics, Inc.**
**Tokyo 100-8252 (JP)**

(72) Inventors:
- **KIMURA, Takahide**
  **Yokohama-shi**
  **Kanagawa 227-8502 (JP)**
- **HOTTA, Yuusuke**
  **Yokohama-shi**
  **Kanagawa 227-8502 (JP)**
- **KIYONO, Kenichi**
  **Yokohama-shi**
  **Kanagawa 227-8502 (JP)**
- **TAKEWAKI, Takahiko**
  **Yokohama-shi**
  **Kanagawa 227-8502 (JP)**
- **MATSUO, Takeshi**
  **Yokohama-shi**
  **Kanagawa 227-8502 (JP)**

(74) Representative: **Hoffmann Eitle**
**Patent- und Rechtsanwälte PartmbB**
**Arabellastraße 30**
**81925 München (DE)**

(54) **METHOD FOR PRODUCING TRANSITION METAL-CONTAINING ZEOLITE, TRANSITION METAL-CONTAINING ZEOLITE OBTAINED BY SAID METHOD, AND EXHAUST GAS PURIFYING CATALYST USING SAID ZEOLITE**

(57)   Provided is a method for producing a transition-metal-containing silicoaluminophosphate that is highly suitable as a catalyst or an adsorbent and has excellent high-temperature hydrothermal durability and excellent water resistance, that is, excellent durability against water submersion (water-submersion durability), in a simple and efficient manner. A method for producing a transition-metal-containing zeolite, the method comprising a steam treatment step in which a transition-metal-containing zeolite is stirred at 710°C or more and 890°C or less in the presence of water vapor, the transition-metal-containing zeolite containing a transition metal in a zeolite having a framework structure including silicon atoms, phosphorus atoms, and aluminium atoms.

EP 3 124 435 A1

## Description

Field of the Invention

The present invention relates to a method for producing a transition-metal-containing silicoaluminophosphate suitable as a catalyst for selective catalytic reduction (SCR) of NOx contained in automobile exhaust gas or the like or as an adsorbent that adsorbs water vapor or the like. The present invention also relates to the above-described zeolite and an exhaust gas purification catalyst that includes the zeolite.

Background of the Invention

Transition-metal-containing zeolites containg a transition metal in a zeolite having a framework structure including at least silicon atoms, phosphorus atoms, and aluminium atoms, have been increasingly used in various fields, such as the chemical industry and automobile exhaust gas purification, for their advantages of, for example, having high catalytic activity due to their transition metal. In particular, due to a growing demand for SCR catalysts used in clean diesel technology, the application of the transition-metal-containing zeolites to the SCR catalysts is being studied.

Transition-metal-containing zeolites have been required to improve their low-temperature water-submersion durability and high-temperature water-vapor durability.

In Patent Literature 1, it is described that the addition of Ca improves the low-temperature water-submersion durability of a zeolite. However, the results of studies conducted by the inventors of the present invention confirmed that the high-temperature water-vapor durability of the zeolite described in Patent Literature 1 becomes degraded when the zeolite is used in a treatment for only about 3 hours.

In Patent Literature 2, it is described that a transition-metal-containing silicoaluminophosphate having high high-temperature hydrothermal durability is produced by hydrothermal synthesis using an aqueous gel including a transition metal raw material and a polyamine. However, it is known that zeolites that include a transition metal have considerably low water resistance.

A transition-metal-containing zeolite having excellent high-temperature hydrothermal durability and excellent durability against water submersion is described also in Japanese Patent Application No. 2012-279807, which was made by the inventors of the present invention. Further improvement of the water-submersion durability of this transition-metal-containing zeolite, in particular, at a relatively low temperature of 100°C or less may be anticipated.

    Patent Literature 1: International Publication WO2013/082550
    Patent Literature 2: Japanese Patent Publication 2013-32268A
    Patent Literature 3: Japanese Patent Application No. 2012-279807

Summary of Invention

It is an object of the present invention to provide a method for producing a transition-metal-containing silicoaluminophosphate that is highly suitable as a catalyst or an adsorbent and has excellent high-temperature hydrothermal durability and excellent water resistance, that is, excellent durability against water submersion (water-submersion durability), in a simple and efficient manner.

The inventors of the present invention conducted extensive studies in order to achieve both excellent low-temperature water-submersion durability and excellent high-temperature water-vapor durability and, as a result, found that the low-temperature water-submersion durability of a transition-metal-containing zeolite can be improved, without degrading the high-temperature water-vapor durability of the transition-metal-containing zeolite and without degrading or destroying the zeolite structure, by subjecting the transition-metal-containing zeolite to a steam treatment in which the transition-metal-containing zeolite is heated at a predetermined temperature in the presence of water vapor while the transition-metal-containing zeolite is stirred.

In Patent Literature 2, a hydrothermal durability test is conducted in order to determine the high-temperature water-vapor durability of the transition-metal-containing zeolite prepared in Examples. In the hydrothermal durability test, the zeolite is passed through water vapor (800°C, 10% by volume) for 5 hours in an atmosphere having a space velocity SV of 3000/h. Thus, this hydrothermal durability test is conducted under conditions analogous to those under which the steam treatment of the present invention is performed in terms of water vapor concentration and treatment temperature. However, in Patent Literature 2, this treatment is performed to simulate conditions under which the zeolite structure of the transition-metal-containing zeolite is likely to be destroyed in order to evaluate the high-temperature water-vapor durability of the zeolite. In other words, the improvement of the low-temperature water-submersion durability of the zeolite by this treatment is not intended. Furthermore, the hydrothermal durability test described in Patent Literature 2 is conducted using a fixed bed as is clearly indicated by the mention of space velocity. This causes non-uniformity in the effect of the treatment. Specifically, the low-temperature water-submersion durability of the zeolite may fail to be improved to a sufficient degree at a position at which the treatment has not been performed to a sufficient degree, and the zeolite structure may be destroyed at a position at which the treatment has been performed at an excessive level.

It is not possible to improve the low-temperature water-submersion durability of a transition-metal-containing zeolite by simply heating the transition-metal-containing zeolite in the presence of water vapor. For improving the low-temperature water-submersion durability of a transition-metal-containing zeolite to a sufficient degree without deteriorating the zeolite structure, it is necessary to stir the transition-metal-containing zeolite in the presence of water vapor while controlling the treatment temperature to be within the range of 710°C to 890°C.

In the method according to the present invention, an alkaline-earth metal such as Ca is not used. This reduces the degradation of the high-temperature water-vapor durability of the transition-metal-containing zeolite.

The proportion of the amount of transition metal included in the uppermost surface of a transition-metal-containing zeolite that has been subjected to the steam treatment is larger than the proportion of the amount of transition metal included in the uppermost surface of the transition-metal-containing zeolite that has not yet been subjected to the steam treatment. This is considered to contribute the improvement of the low-temperature water-submersion durability of the transition-metal-containing zeolite.

The gist of the present invention is as follows.

[1] A method for producing a transition-metal-containing zeolite, the method comprising a steam treatment step in which a transition-metal-containing zeolite is stirred at 710°C or more and 890°C or less in the presence of water vapor, the transition-metal-containing zeolite containing a transition metal in a zeolite having a framework structure including silicon atoms, phosphorus atoms, and aluminium atoms.

[2] The method for producing a transition-metal-containing zeolite according to [1], wherein the steam treatment is performed at 750°C or more and 850°C or less.

[3] The method for producing a transition-metal-containing zeolite according to [1] or [2], wherein the transition metal is copper.

[4] The method for producing a transition-metal-containing zeolite according to any one of [1] to [3], wherein the steam treatment is performed in an atmosphere having a water vapor concentration of 1% by volume or more.

[5] The method for producing a transition-metal-containing zeolite according to any one of [1] to [4], wherein the steam treatment is performed for 0.1 hours or more and 72 hours or less.

[6] The method for producing a transition-metal-containing zeolite according to any one of [1] to [5], wherein the transition-metal-containing zeolite is stirred by using at least one selected from a stirrer having an axis, a stirrer that does not have an axis, a stirrer connected to a tank, and a fluid.

[7] The method for producing a transition-metal-containing zeolite according to any one of [1] to [6], wherein the content of the transition metal in the transition-metal-containing zeolite is 0.1% by weight or more and 30% by weight or less.

[8] The method for producing a transition-metal-containing zeolite according to any one of [1] to [7], wherein the Si content in the transition-metal-containing zeolite satisfies Formula (I):

$$0.01 \leq x \leq 0.5 \ldots \quad (I),$$

wherein x represents the ratio of the number of moles of the silicon atoms to the total number of moles of the silicon atoms, the aluminium atoms, and the phosphorus atoms included in the framework structure.

[9] The method for producing a transition-metal-containing zeolite according to any one of [1] to [8], wherein the transition-metal-containing zeolite has a zeolite structure having a framework density of 10.0 T/1000 $Å^3$ or more and 16.0 T/1000 $Å^3$ or less, the zeolite structure being defined by the International Zeolite Association (IZA).

[10] The method for producing a transition-metal-containing zeolite according to any one of [1] to [9], wherein the transition-metal-containing zeolite has a zeolite structure CHA, the zeolite structure being defined by the International Zeolite Association (IZA).

[11] The method for producing a transition-metal-containing zeolite according to any one of [1] to [10], wherein the transition-metal-containing zeolite that is to be subjected to the steam treatment is a transition-metal-containing zeolite prepared by hydrothermal synthesis in the presence of a transition metal raw material.

[12] The method for producing a transition-metal-containing zeolite according to [11], wherein the transition-metal-containing zeolite that is to be subjected to the steam treatment is a transition-metal-containing zeolite prepared by hydrothermal synthesis in the presence of the transition metal raw material and a polyamine represented by General Formula $H_2N-(C_nH_{2n}NH)_x-H$ (where n is an integer of 2 to 6 and x is an integer of 2 to 10).

[13] A transition-metal-containing zeolite produced by the method according to any one of [1] to [12].

[14] A transition-metal-containing zeolite that has been subjected to a steam treatment, the transition-metal-containing zeolite containing a transition metal in a zeolite having a framework structure including silicon atoms, phosphorus atoms, and aluminium atoms, the ratio of the concentration of the transition metal in an uppermost surface of the transition-metal-containing zeolite to the concentration of the transition metal in the entire transition-metal-containing zeolite, that is, the ratio of the content of the transition metal determined by XPS to the content of the transition metal determined by XRF, being 1.05 to 3.00.

[15] An exhaust gas purification catalyst comprising the transition-metal-containing zeolite according to [13] or [14].

Advantageous Effects of Invention

According to the present invention, a transition-metal-containing zeolite that is highly suitable as a catalyst or an adsorbent and has excellent high-temperature hydrothermal durability and excellent water resistance, that is, excellent durability against water submersion (water-submersion durability), may be produced in a simple and efficient manner.

Furthermore, in the present invention, a transition-metal-containing zeolite having higher catalytic performance and higher water resistance may be produced by changing the combination of production conditions appropriately.

Description of Embodiments

Embodiments of the present invention are described below in detail. The following description is merely an example (typical example) of the embodiments of the present invention and does not limit the present invention.

[Transition-Metal-Containing Zeolite To Be Subjected To Steam Treatment]

A transition-metal-containing zeolite that is to be subjected to a steam treatment in the present invention is a transition-metal-containing zeolite containing a transition metal in a zeolite having a framework structure including at least silicon atoms, phosphorus atoms, and aluminium atoms. The transition-metal-containing zeolite may be prepared by synthesizing a silicoaluminophosphate including aluminium atoms, phosphorus atoms, and silicon atoms and supporting a transition metal on the silicoaluminophosphate by an usual method such as ion exchange or impregnation. The transition-metal-containing zeolite may also be a zeolite synthesized by adding a transition metal raw material to materials of the zeolite in hydrothermal synthesis. In particular, a zeolite prepared by the latter method is preferable.

Hereinafter, a transition-metal-containing zeolite that is to be subjected to a steam treatment may be referred to as "transition-metal-containing zeolite A", and a transition-metal-containing zeolite prepared by subjecting the transition-metal-containing zeolite A to a steam treatment may be referred to as "transition-metal-containing zeolite B".

In the case where the transition-metal-containing zeolite A, which is to be subjected to a steam treatment, is prepared by hydrothermal synthesis using the template described below, the transition-metal-containing zeolite A may include but not necessarily include the template. The term "amount of transition metal" used herein refers to the amount of transition-metal-containing zeolite A that does not include the template.

The proportion of the amount of transition metal included in the uppermost surface of the transition-metal-containing zeolite B is increased by the steam treatment compared with the transition-metal-containing zeolite A. The transition-metal-containing zeolites A and B are equal to each other in terms of the proportions of aluminium atoms, phosphorus atoms, and silicon atoms constituting the framework structure, the amount of transition metal included in the entire transition-metal-containing zeolite, zeolite structure, framework density, particle size, and the like.

Ratio of the aluminum atoms, phosphorus atoms, and silicon atoms contained in the framework structure of the transition-metal-containing zeolite according to the present invention (the transition-metal-containing zeolite A) preferably satisfies the following inequalities (I), (II), and (III):

$$0.01 \leq x \leq 0.5 \qquad\qquad\qquad (I)$$

$$0.3 \leq y \leq 0.6 \qquad\qquad\qquad (II)$$

$$0.3 \leq z \leq 0.6 \qquad\qquad\qquad (III)$$

where x represents the molar ratio of the silicon atoms to the total of the silicon atoms, aluminum atoms, and phosphorus atoms in the framework structure; y represents the molar ratio of the aluminum atoms to the total of the silicon atoms, aluminum atoms, and phosphorus atoms in the framework structure; and z represents the molar ratio of the phosphorus atoms to the total of the silicon atoms, aluminum atoms, and phosphorus atoms in the framework structure.

The value of x is usually 0.01 or more, preferably 0.03 or more, and more preferably 0.07 or more. The value of x is usually 0.5 or less, preferably 0.3 or less, and more preferably 0.2 or less and still more preferably 0.12 or less. When the value of x is more than the above upper limit, the contamination of impurities is likely to occur during synthesis.

In addition, y is usually 0.3 or more, preferably 0.35 or more, and more preferably 0.4 or more. Furthermore, y is usually 0.6 or less and preferably 0.55 or less. When the value of y is less than the above lower limit or is more than the above upper limit, the contamination of impurities is likely to occur during synthesis.

In addition, z is usually 0.3 or more, preferably 0.35 or more, and more preferably 0.4 or more. Furthermore, z is usually 0.6 or less, preferably 0.55 or less, and more preferably 0.50 or less. When the value of z is less than the above lower limit, the contamination of impurities is likely to occur during synthesis. A value z higher than the upper limit may result in difficult crystallization of the zeolite.

The proportion of each atom in the framework structure of the transition-metal-containing zeolite is determined by element analysis in which a sample is dissolved in a hot aqueous solution of hydrochloric acid and is then determined by inductively coupled plasma (ICP) emission spectrometry.

Considering the characteristics required for use as an adsorbent or a catalyst, the transition metal may generally be, but is not limited to, a group 3-12 transition metal, such as iron, cobalt, magnesium, zinc, copper, palladium, iridium, platinum, silver, gold, cerium, lanthanum, praseodymium, titanium, or zirconium. The transition metal is preferably a group 8, 9, or 11 transition metal, such as iron, cobalt, or copper, more preferably a group 8 or 11 transition metal. One of these transition metals may be contained in the zeolite, or a combination of two or more of these transition metals may be contained in the zeolite. Among these transition metals, particularly preferred is iron and/or copper, and more particularly preferred is copper.

The transition metal content of the transition-metal-containing zeolite according to the present invention (the transition-metal-containing zeolite A) is 0.1% or more and 30% or less, preferably 0.3% or more, more preferably 0.5% or more, still more preferably 1% or more and preferably 10% or less, more preferably 8% or less, still more preferably 6% or less of the weight of the transition-metal-containing zeolite in an anhydrous state. A transition metal content of transition-metal-containing zeolite lower than the lower limit results in an insufficient number of dispersive transition metal active sites. A transition metal content of transition-metal-containing zeolite higher than the upper limit may result in insufficiency of endurance under a high temperature hydrothermal condition.

As described above, the amount of transition metal of a transition-metal-containing zeolite A is the amount of transition metal of a transition-metal-containing zeolite not containing template, in case that the transition-metal-containing zeolite A to be subjected to steam treatment contains a template.

The amount (W1 (% by weight)) of transition metal M is determined by a calibration curve prepared by the following method using X-ray fluorescence analysis (XRF);

[Preparation of the calibration curve]

Three or more samples of transition-metal-containing zeolite each containing transition metal M at a different amount are used as standard samples. Each sample is dissolved in aqueous hydrochloric acid by the application of heat and is subjected to inductively coupled plasma (ICP) spectroscopy to determine an amount (% by weight) of atoms of transition metal M. The same standard sample is subjected to XRF to measure intensity of X-ray fluorescence of transition metal, thereby preparing a calibration curve for an amount of atoms of transition metal M and intensity of X-ray fluorescence.

A sample of transition-metal-containing zeolite is subjected to XRF to measure intensity of X-ray fluorescence of transition metal M, thereby determining the amount $W_1$ (% by weight) of the transition metal M using the calibration curve. At the same time, the water content $W_{H2O}$ (% by weight) of the sample is measured by thermogravimetric analysis (TG). The amount W (% by weight) of transition metal M in an anhydrous state is calculated using the following equation (V).

$$W = W_1 / (1 - W_{H2O}) \qquad (V)$$

When the transition-metal-containing zeolites according to the present invention, that is the transition-metal-containing zeolite B, is used as automobile exhaust-gas purification catalysts or water vapor adsorbents, among the transition-metal-containing zeolite according to the present invention, a transition-metal-containing zeolite having the following structure and framework density is preferred.

The structure of zeolite is determined by X-ray diffraction (XRD) and is classified into AEI, AFR, AFS, AFT, AFX, AFY, AHT, CHA, DFO, ERI, FAU, GIS, LEV, LTA, and VFI in accordance with the codes defined by the International Zeolite Association (IZA). A zeolite having a structure of AEI, AFX, GIS, CHA, VFI, AFS, LTA, FAU, or AFY is preferred, and a zeolite having a structure of CHA is most preferred.

The framework density is a parameter that reflects the crystal structure and is preferably 10.0 T/1000 cubic angstroms or more, and generally 16.0 T/1000 cubic angstroms or less, preferably 15.0 T/1000 cubic angstroms or less, in accordance with ATLAS OF ZEOLITE FRAMEWORK TYPES Fifth Revised Edition 2001 by IZA.

The framework density (T/1000 cubic angstroms) refers to the number of T atoms (atoms constituting the zeolite framework structure other than oxygen atoms) per unit volume of zeolite of 1000 cubic angstroms and depends on the zeolite structure.

When zeolite has a framework density lower than the lower limit, its structure may be unstable, or its durability tends to be reduced. When zeolite has a framework density higher than the upper limit, the amount of adsorption or catalytic activity may be reduced, or the zeolite may be unsuitable as a catalyst.

The particle size of the transition-metal-containing zeolites according to the present invention (the transition-metal-containing zeolite A and transition-metal-containing zeolite B) is not particularly limited and is generally 0.1 $\mu$m or more, preferably 1 $\mu$m or more, more preferably 3 $\mu$m or more, and generally 30 $\mu$m or less, preferably 20 $\mu$m or less, more preferably 15 $\mu$m or less.

The particle size of a transition-metal-containing zeolite in the present invention refers to the average primary particle size of 10 to 30 zeolite particles observed with an electron microscope.

A method for producing the transition-metal-containing zeolite A to be subjected to steam treatment is not limitative, but powdery transition-metal-containing zeolite A may be produced by the below-described method.

{Method for producing transition-metal-containing zeolite A}

Hereinafter described is a method for producing a silicoaluminophosphate zeolite containing transition metal as an example of a method for producing transition-metal-containing zeolite A. In the method, a raw material of transition metal is added when a zeolite is synthesized hydrothermally.

The method includes a step for synthesizing zeolite hydrothermally from an aqueous gel prepared from the below-described raw materials.

{Raw Materials}

The raw materials used in the preparation of the aqueous gel according to the present invention will be described below.

<Aluminum Atom Raw Material>

The aluminum atom raw material for the zeolite according to the first invention is not particularly limited and may generally be pseudo-boehmite, an aluminum alkoxide, such as aluminum isopropoxide or aluminum triethoxide, aluminum hydroxide, alumina sol, or sodium aluminate. These may be used alone or in combination. The aluminum atom raw material is preferably pseudo-boehmite for convenience in handling and high reactivity.

<Silicon Atom Raw Material>

The silicon atom raw material for the zeolite according to the first invention is not particularly limited and may generally be fumed silica, silica sol, colloidal silica, water glass, ethyl silicate, or methyl silicate. These may be used alone or in combination. The silicon atom raw material is preferably fumed silica because of its high purity and reactivity.

<Phosphorus Atom Raw Material>

The phosphorus atom raw material for the zeolite according to the first invention is generally phosphoric acid and may also be aluminum phosphate. The phosphorus atom raw material may be used alone or in combination.

<Transition Metal Raw Material>

The transition metal raw material to be contained in the zeolite according to the present invention is not particularly limited and may generally be an inorganic acid salt, such as sulfate, nitrate, phosphate, chloride, or bromide, an organic acid salt, such as acetate, oxalate, or citrate, or an organometallic compound, such as pentacarbonyl or ferrocene, of the transition metal. Among these, an inorganic acid salt or an organic acid salt is preferred in terms of water solubility.

Colloidal oxide or an oxide fine powder may also be used.

Considering the characteristics required for use as an adsorbent or a catalyst, the transition metal may generally be, but is not limited to, a group 3-12 transition metal, such as iron, cobalt, magnesium, zinc, copper, palladium, iridium, platinum, silver, gold, cerium, lanthanum, praseodymium, titanium, or zirconium, preferably a group 8, 9, or 11 transition metal, such as iron, cobalt, or copper, more preferably a group 8 or 11 transition metal. One of these transition metals may be contained in the zeolite, or a combination of two or more of these transition metals may be contained in the zeolite. Among these transition metals, particularly preferred is iron and/or copper, and more particularly preferred is copper.

In the present invention, the transition metal raw material is preferably copper (II) oxide or copper (II) acetate, more preferably copper (II) oxide.

The transition metal raw material may be a combination of two or more different transition metals or compounds.

<Template>

The aqueous gel according to the present invention may further contain an amine, an imine, or a quaternary ammonium salt, which is generally used as a template in the production of zeolite.

The template is preferably at least one compound selected from the group consisting of the below (1)-(5). These compounds are easily available and inexpensive and are suitable because the resulting silicoaluminophosphate zeolite is easy to handle and rarely undergoes structural disorders.

(1) alicyclic heterocyclic compounds containing a nitrogen atom as a heteroatom,
(2) amines having an alkyl group (alkylamines),
(3) amines having a cycloalkyl group (cycloalkylamines),
(4) tetraalkylammonium hydroxides, and
(5) polyamine.

Among these, (1) alicyclic heterocyclic compounds containing a nitrogen atom as a heteroatom, (2) alkylamines, and (3) cycloalkylamines are preferred. More preferably, one or more compounds selected from each of two or more of these three groups are used.

(1) Alicyclic Heterocyclic Compounds Containing Nitrogen Atom as Heteroatom

Each heterocyclic ring of the alicyclic heterocyclic compounds containing a nitrogen atom as a heteroatom is generally a 5-, 6-, or 7-membered ring, preferably a 6-membered ring. The number of heteroatoms of each heterocyclic ring is generally 3 or less, preferably 2 or less. The alicyclic heterocyclic compounds may contain a heteroatom other than the nitrogen atom and preferably contains an oxygen atom in addition to the nitrogen atom. The heteroatom(s) may take any position and are preferably not adjacent to each other.

The alicyclic heterocyclic compounds containing a nitrogen atom as a heteroatom generally have a molecular weight of 250 or less, preferably 200 or less, more preferably 150 or less, and generally 30 or more, preferably 40 or more, more preferably 50 or more.

Examples of the alicyclic heterocyclic compounds containing a nitrogen atom as a heteroatom include morpholine, N-methylmorpholine, piperidine, piperazine, N,N'-dimethylpiperazine, 1,4-diazabicyclo(2,2,2)octane, N-methylpiperidine, 3-methylpiperidine, quinuclidine, pyrrolidine, N-methylpyrrolidone, and hexamethyleneimine. These may be used alone or in combination. Among these, morpholine, hexamethyleneimine, and piperidine are preferred, and morpholine is particularly preferred.

(2) Alkylamines

Each alkyl group of the alkylamines is generally a linear alkyl group. The number of alkyl groups of the alkylamines is preferably, but is not limited to, 3 per molecule.

Each alkyl group of the alkylamines may have a substituent, such as a hydroxy group.

Each alkyl group of the alkylamines preferably has 4 or less carbon atoms. More preferably, the total number of carbon atoms of the alkyl group(s) is 5 or more and 30 or less per molecule.

The alkylamines generally have a molecular weight of 250 or less, preferably 200 or less, more preferably 150 or less.

Examples of the alkylamines include di-n-propylamine, tri-n-propylamine, tri-isopropylamine, triethylamine, triethanolamine, N,N-diethylethanolamine, N,N-dimethylethanolamine, N-methyldiethanolamine, N-methylethanolamine, di-n-butylamine, neopentylamine, di-n-pentylamine, isopropylamine, t-butylamine, ethylenediamine, di-isopropyl-ethylamine, and N-methyl-n-butylamine. These may be used alone or in combination. Among these, di-n-propylamine, tri-n-propylamine, tri-isopropylamine, triethylamine, di-n-butylamine, isopropylamine, t-butylamine, ethylenediamine, di-isopropyl-ethylamine, and N-methyl-n-butylamine are preferred, and triethylamine is particularly preferred.

(3) Cycloalkylamines

The number of carbon atoms of each alkyl group of cycloalkylamines is preferably 4 or more and 10 or less. Among others, cyclohexylamine is preferred. The cycloalkylamines may be used alone or in combination.

(4) Tetraalkylammonium Hydroxides

The tetraalkylammonium hydroxides preferably have four alkyl groups having 4 or less carbon atoms. The tetraalkylammonium hydroxides may be used alone or in combination.

(5) Polyamine

The polyamine is preferably a polyamine having a general formula $H_2N-(C_nH_{2n}NH)_x-H$ (wherein n denotes an integer in the range of 2 to 6, and x denotes an integer in the range of 2 to 10).
In the general formula described above, n preferably denotes an integer in the range of 2 to 5, more preferably 2 to 4, still more preferably 2 or 3, particularly preferably 2. x preferably denotes an integer in the range of 2 to 6, more preferably 2 to 5, still more preferably 3 or 4, particularly preferably 4.
Such a polyamine may be inexpensive ethylenediamine, diethylenetriamine, triethylenetetramine, or tetraethylenepentamine, preferably triethylenetetramine, particularly preferably tetraethylenepentamine. These polyamines may be used alone or in combination. A branched polyamine may also be used.
When two or more templates are used in combination thereof, the combination is not limitative, but is preferably a combination of at least one of the blow (1)-(4) and at least one of (5), more preferably at least one of (5) and two or more of (1)-(4), still more preferably at least one of (5) and at least one of (1) and at least one of (2). A specific example of the combination of two or more of morpholine, triethylamine, tetraethylenpentamine, and cyclohexylamine, particularly the combination of morpholine, trimethylamine and tetraethylenpentamine, are preferably used in combination.
Although the combination of (5) polyamine and either template of (1)-(4) as described above may not be used in the present invention, a transition-metal-containing aluminophosphate zeolite having higher high-temperature hydrothermal durability can be produced by using the combination of the templates.
When polyamine is contained in addition to the raw material of transition metal in the aqueous gel, the transition metal in the aqueous gel interacts strongly with the polyamine to become stable, and the transition metal hardly reacts with the elements of the zeolite framework. As a result, transition metal hardly migrates into the framework of the zeolite (that is, elements of the zeolite framework are hardly replaced by transition metal), and the transition metal tends to be dispersed to outside of zeolite framework such as pores of zeolite and held therein. Accordingly, it is considered that silicoaminophosphate containing transition metal having high catalyst performance, high adsorption performance, high hydrothermal durability is synthesized.
The mixing ratio of the groups of the templates needs to be selected depending on conditions. In the case of using two types of templates in combination, the molar ratio of the mixed two-type templates is usually 1:20 to 20:1, preferably 1:10 to 10:1, and more preferably 1:5 to 5:1. In the case of using three types of templates in combination, the molar ratio of a third template to the sum of the mixed two-type templates of above (1) and (2) is usually 1:20 to 20:1, preferably 1:10 to 10:1, and more preferably 1:5 to 5:1.

{Preparation of Aqueous Gel}

In a preferable embodiment of the present invention where an aqueous gel is produced using (5) polyamine and optional other template as the template, the aqueous gel is prepared by mixing the silicon atom raw material, the aluminum atom raw material, the phosphorus atom raw material, the transition metal raw material, the polyamine, and an optional template with water.
The composition of the aqueous gel used in the present invention preferably has the molar ratios of the silicon atom raw material, the aluminum atom raw material, the phosphorus atom raw material, and the transition metal raw material on an oxide basis as described below.
The $SiO_2/Al_2O_3$ ratio is generally more than 0, preferably 0.2 or more, preferably 0.8 or less, more preferably 0.6 or less, still more preferably 0.4 or less, particularly preferably 0.3 or less.
The $P_2O_5/Al_2O_3$ ratios is generally 0.6 or more, preferably 0.7 or more, more preferably 0.8 or more, and generally 1.3 or less, preferably 1.2 or less, more preferably 1.1 or less.

The $M_aO_b/Al_2O_3$ ratio (wherein M denotes the transition metal, a and b denote the atomic ratios of M and O, respectively) is generally 0.01 or more, preferably 0.03 or more, more preferably 0.05 or more, and generally 1 or less, preferably 0.8 or less, more preferably 0.4 or less, still more preferably 0.3 or less.

When the $SiO_2/Al_2O_3$ ratio is higher than the upper limit, this results in a low degree of crystallinity or insufficient hydrothermal durability.

When the $P_2O_5/Al_2O_3$ ratio is lower than the lower limit, this results in a low degree of crystallinity or insufficient hydrothermal durability. When the $P_2O_5/Al_2O_3$ ratio is higher than the upper limit, this also results in a low degree of crystallinity or insufficient hydrothermal durability.

The composition of zeolite produced by hydrothermal synthesis correlates with the composition of the aqueous gel. Thus, in order to produce a zeolite having a desired composition, the composition of the aqueous gel is appropriately determined in the ranges described above.

When the $M_aO_b/Al_2O_3$ ratio is lower than the lower limit, this results in insufficint loading of the transition metal on the zeolite. When the $M_aO_b/Al_2O_3$ ratio is higher than the upper limit, this results in a low degree of crystallinity or insufficient hydrothermal durability.

In the presence of another template, the polyamine content of the aqueous gel should be sufficient to stabilize the transition metal raw material. In the absence of a template, since the polyamine also acts as another template, the polyamine content of the aqueous gel should be sufficient so that the polyamine functions as a template.

More specifically, the aqueous gel preferably has the following polyamine content.

<In the Presence of another Template>

In the presence of another template, the total content of the polyamine and the other template of the aqueous gel is such that the molar ratio of the total of the polyamine and the other template to the aluminum atom raw material on an oxide ($Al_2O_3$) basis in the aqueous gel is generally 0.2 or more, preferably 0.5 or more, more preferably 1 or more, and generally 4 or less, preferably 3 or less, more preferably 2.5 or less.

When the total content of the polyamine and the other template is lower than the lower limit, this results in a low degree of crystallinity or insufficient hydrothermal durability. When the total content of the polyamine and the template is higher than the upper limit, this results in an insufficient yield of the zeolite.

The polyamine is preferably used such that the molar ratio of the polyamine to the transition metal raw material on an oxide ($M_aO_b$) basis is generally 0.1 or more, preferably 0.5 or more, more preferably 0.8 or more, and generally 10 or less, preferably 5 or less, more preferably 4 or less.

When the polyamine content of the aqueous gel is lower than the lower limit, the advantages of the present invention using the polyamine are insufficient. When the polyamine content of the aqueous gel is higher than the upper limit, this results in an insufficient yield of the zeolite.

<In the Absence of other Template>

In the absence of another template, because of the same reason as described above, the polyamine content of the aqueous gel is preferably such that the molar ratio of the polyamine to the aluminum atom raw material on an oxide ($Al_2O_3$) basis in the aqueous gel is generally 0.2 or more, preferably 0.5 or more, more preferably 1 or more, and generally 4 or less, preferably 3 or less, more preferably 2.5 or less, and such that the molar ratio of the polyamine to the transition metal raw material on an oxide ($M_aO_b$) basis is generally 1 or more, preferably 5 or more, more preferably 10 or more, and generally 50 or less, preferably 30 or less, more preferably 20 or less.

As described above, the template is appropriately selected for given conditions. For example, when morpholine and triethylamine are used in combination as templates, the morpholine/triethylamine molar ratio is preferably in the range of 0.05 to 20, more preferably 0.1 to 10, still more preferably 0.2 to 9.

One or more templates selected from each of the two or more groups may be mixed in any order. The templates may be mixed with each other before mixed with other material(s), or each of the templates may be mixed with other material(s).

In terms of ease with which the zeolite can be synthesized and productivity, the water content of the aqueous gel is such that the molar ratio of water to the aluminum atom raw material on an oxide ($Al_2O_3$) basis is generally 3 or more, preferably 5 or more, more preferably 10 or more, and generally 200 or less, preferably 150 or less, more preferably 120 or less.

The pH of the aqueous gel is generally 5 or more, preferably 6 or more, more preferably 6.5 or more, and generally 11 or less, preferably 10 or less, more preferably 9 or less.

If desired, the aqueous gel may contain another component. Such a component may be an alkali metal or alkaline-earth metal hydroxide or salt or a hydrophilic organic solvent, such as an alcohol. The amount of such a component in the aqueous gel is such that the molar ratio of the alkali metal or alkaline-earth metal hydroxide or salt to the aluminum atom raw material on an oxide ($Al_2O_3$) basis is generally 0.2 or less, preferably 0.1 or less, and such that the molar ratio of the hydrophilic organic solvent, such as an alcohol, to water in the aqueous gel is generally 0.5 or less, preferably 0.3 or less.

In the preparation of the aqueous gel, the mixing sequence of the raw materials is not particularly limited and may be appropriately determined for given conditions. In general, water is mixed with the phosphorus atom raw material and the aluminum atom raw material, and then the mixture is mixed with the silicon atom raw material and the template(s). The transition metal raw material and the polyamine may be added to the mixture at any time. The transition metal raw material and the polyamine are preferably mixed with each other in advance because this effectively stabilizes the transition metal raw material by the formation of a complex with the polyamine.

The transition metal raw material may be dissolved in a small amount of water and a phosphorus atom raw material, such as phosphoric acid, and then another raw material may be added to the solution. This method can increase the yield and the amount of transition metal by decreasing the amount of water and is preferred when the transition metal content is 4% by weight or more of the transition-metal-containing zeolite. This method is also preferred in terms of the performance of the transition-metal-containing zeolite used as a catalyst or an adsorbent. The term "a small amount of water", as used herein, means that the molar ratio of water to the aluminum atom raw material on an $Al_2O_3$ basis is preferably 50 or less, more preferably 40 or less, still more preferably 35 or less.

{Hydrothermal Synthesis}

Hydrothermal synthesis is performed by charging the aqueous gel thus prepared in a pressure vessel and maintaining a predetermined temperature while the aqueous gel is stirred or left still under autogenous pressure or under a gas pressure at which crystallization is not inhibited.

The reaction temperature in the hydrothermal synthesis is generally 100°C or more, preferably 120°C or more, more preferably 150°C or more, and generally 300°C or less, preferably 250°C or less, more preferably 220°C or less. The reaction time is generally 2 hours or more, preferably 3 hours or more, more preferably 5 hours or more, and generally 30 days or less, preferably 10 days or less, more preferably 4 days or less. The reaction temperature may be constant during the reaction or may be stepwise or continuously changed.

{Zeolite Containing Template etc.}

After the hydrothermal synthesis, the resulting product zeolite (hereinafter referred to as "zeolite containing template etc.") containing the polyamine and the optional other template ("the polyamine" or "the polyamine and the other template" are hereinafter referred to as "template etc.") is separated from the hydrothermal synthetic reaction solution. The zeolite containing the template etc. may be separated from the hydrothermal synthetic reaction solution by any method. In general, the zeolite may be separated by filtration, decantation or direct drying. Drying is conducted preferably at a temperature from a room temperature to 150°C.

The zeolite containing the template etc. separated from the hydrothermal synthetic reaction solution may be washed by water. The zeolite containing the template etc. may be washed by water preferably to an extent that when the washed zeolite containing the template etc. is immersed in water six times in weight of the zeolite, the water has a conductivity (hereinafter referred to as "immersion water conductivity" sometimes) of 0.1 mS/cm or more, preferably 0.5 mS/cm or more, still more preferably 1 mS/cm or more. When the zeolite containing the template etc. is washed such that the immersion water conductivity is less than the lower limit of the above range, the zeolite containing transition metal may be deteriorated in water resistance.

After washed by water, the zeolite containing the template etc. may be separated from water by filtration and then dried. Instead thereof, the zeolite containing the template etc. dispersed in water may be dried directly by spray-drying etc. to become powdery zeolite containing the template etc.. Drying is conducted preferably at a temperature from a room temperature to 150°C.

The zeolite containing the template etc. separated from the hydrothermal synthetic reaction solution may be subjected to the steam treatment without washing, or may be subjected to removing the template and then to steam treatment without washing.

The zeolite containing the template is then subjected to steam treating. Prior to the steam treating, the template etc. may be removed from the powdery zeolite containing the template etc.. The template etc. may be removed by any method. In general, organic substances (template etc.) contained in the zeolite may be removed by calcinating in air, an inert gas atmosphere containing oxygen or in an inert gas atmosphere at a temperature in the range of 300°C to 1000°C or by extraction using an extracting solvent, such as aqueous ethanol or HCl-containing ether.

Preferably, the template etc. is removed by calcinating in terms of productivity. In this case, the calcination is conducted under a flow of a gas containing essentially no steam (namely having steam content of 0.5 volume % or less) at a temperature preferably in the range of 400°C to 900°C, more preferably 450°C to 850°C, still more preferably 500°C to 800°C for preferably 0.1 to 72 hours, more preferably 0.3 to 60 hours, still more preferably 0.5 to 48 hours.

{Steam Treatment}

The transition-metal-containing zeolite A, which is prepared by removing the template and the like from the dried zeolite containing the template and the like as needed, is subjected to a steam treatment.
In the present invention, the steam treatment is performed at 710°C to 890°C and preferably at 750°C to 850°C while the transition-metal-containing zeolite A is stirred.
The term "stir" used herein refers to not only an operation that can be described as "stirring" or "mixing" but also to operations that can be described as "causing to flow", "shaking", or "inverting" in a broad sense. That is, the term "stir" used herein refers to all operations by which the surface of an aggregate of particles of the transition-metal-containing zeolite A can be renewed in the steam treatment.
Stirring may be performed by any method that enables the transition-metal-containing zeolite A, which is to be subjected to the steam treatment, to be stirred uniformly. Thus, a method for stirring the transition-metal-containing zeolite A is not limited. In the present invention, specifically, the steam treatment is performed by heating the transition-metal-containing zeolite A at the above temperature in an atmosphere having a water vapor content of preferably 1% by volume or more, more preferably 3% to 40% by volume, and further preferably 5% to 30% by volume inside a steam treatment tank (steam treatment container) containing the transition-metal-containing zeolite A while the transition-metal-containing zeolite A is stirred with one or more selected from a stirrer having an axis, a stirrer that does not have an axis, a stirrer connected to a tank, and a fluid.
The steam treatment is preferably performed for 0.1 hours or more and 72 hours or less, is more preferably for 0.3 to 24 hours, is further preferably for 0.5 to 12 hours, and is most preferably for 1 to 6 hours.
If the temperature at which the steam treatment is performed, the time during which the steam treatment is performed, or the water vapor content in the atmosphere is less than the above lower limit, the enhancement of water resistance due to the steam treatment may fail to be achieved to a sufficient degree. If the steam treatment temperature is higher than the above upper limit, the zeolite structure may become degraded or destroyed. Setting the steam treatment time to be larger than the above upper limit does not contribute to further enhancement of the water resistance of the zeolite and is not preferable in terms of productivity. If the water vapor content is higher than the above upper limit, the zeolite structure may become degraded or destroyed.
For supplying a water-vapor-containing gas in the steam treatment, a flow-type method or a batch-type method may be employed. A water-vapor-containing air is commonly used as a water-vapor-containing gas. Alternatively, an inert gas in which water vapor is entrained may also be used.
The steam treatment tank (steam treatment container), into which the transition-metal-containing zeolite A is to be charged in the steam treatment, preferably has a volume appropriate to the amount of the transition-metal-containing zeolite A such that the transition-metal-containing zeolite A can be stirred to a sufficient degree with the above stirring means and the transition-metal-containing zeolite A contained in the tank is uniformly treated with steam. Specifically, the steam treatment tank (steam treatment container) preferably has an effective volume that is 1.2 to 20 times and particularly 1.5 to 10 times the volume of the transition-metal-containing zeolite A (the apparent volume of the transition-metal-containing zeolite A which is measured after the surface of the transition-metal-containing zeolite A charged in a container has been flattened without performing stamping or the like) that is to be charged into the steam treatment tank. If the effective volume of the steam treatment tank is smaller than the above lower limit, the transition-metal-containing zeolite A may fail to be stirred to a sufficient degree in the steam treatment tank such that the steam treatment is performed uniformly. Setting the effective volume of the steam treatment tank to be larger than the above upper limit does not further enhance the advantageous effect of the steam treatment and disadvantageously increases the size of the steam treatment tank.
Charging the transition-metal-containing zeolite A into a steam treatment tank (steam treatment container) having an appropriate volume makes it possible to cause the transition-metal-containing zeolite A to flow and be stirred (i.e., stirring using a fluid) by passing a water-vapor-containing gas through the transition-metal-containing zeolite A at an appropriate velocity. Performing rotation or vibration by using the steam treatment tank (steam treatment container) as a stirrer makes it possible to stir the transition-metal-containing zeolite A without using a stirring rod or a stirring impeller.
The steam treatment may be performed in a batch-processing manner by charging the transition-metal-containing zeolite A into the stirring tank or in a continuous-processing manner by using a continuous rotary kiln or the like.
A continuous or batch rotary kiln is preferably used in consideration of the uniformity and mass productivity of the treatment of the powder. In particular, a continuous rotary kiln is preferable.
For heating the continuous rotary kiln, electrothermal heating, gas-combustion heating, and the like may be employed. Electrothermal heating, by which the temperature can be increased more uniformly, is preferable.
Rotating the rotary kiln causes the transition-metal-containing zeolite A to be stirred and enables the transition-metal-containing zeolite A to be uniformly treated with steam. The number of revolutions of the rotary kiln is preferably 0.1 to 10 rpm.

A lifter (scooping plate) may be disposed in the kiln or a rotatable object may be charged into the kiln in order to increase the stirring force of the kiln.

The steam may be introduced into the kiln on a side of the kiln on which the transition-metal-containing zeolite A is charged into the kiln or on which the transition-metal-containing zeolite A is discharged from the kiln.

Since the temperature distribution inside the rotary kiln is usually not uniform, it is preferable to measure the temperature of the zeolite inside the kiln at several positions with a thermocouple disposed in the kiln and consider the highest temperature to be a temperature at which the steam treatment is performed.

[Steam-Treated Transition-Metal-Containing Zeolite]

The transition-metal-containing zeolite according to the present invention is a transition-metal-containing zeolite B prepared by a method including the above-described steam treatment step.

The proportion of the amount of transition metal included in the uppermost surface of the transition-metal-containing zeolite B, which is prepared by treating the transition-metal-containing zeolite A with steam, is larger than the proportion of the amount of transition metal included in the uppermost surface of the transition-metal-containing zeolite A. Specifically, the ratio of the concentration of the transition metal in the uppermost surface of the transition-metal-containing zeolite to the concentration of the transition metal in the entire transition-metal-containing zeolite, which is calculated as the ratio of the amount of transition metal determined by X-ray photoelectron spectroscopy (XPS) to the amount of transition metal determined by XRF (amount of transition metal determined by XPS/amount of transition metal determined by XRF; hereinafter, this ratio may be referred to as "uppermost surface/inside transition metal ratio") is preferably 1.05 to 3.00 and is more preferably 1.08 to 2.80.

If the uppermost surface/inside transition metal ratio is lower than the above lower limit, the water resistance of the zeolite is not likely to be enhanced due to the steam treatment to a sufficient degree. If the uppermost surface/inside transition metal ratio is higher than the above upper limit, pores present in the surface of the zeolite may become clogged with the transition metal.

The uppermost surface/inside transition metal ratio of the transition-metal-containing zeolite A, which has not yet been subjected to the steam treatment, is commonly 0.96 to 1.04, that is, close to 1.

The amount of transition metal is determined by XRF in the above-described manner.

XPS is a method for determining the distribution of atoms that are present in the uppermost surfaces (thickness: a few nanometers) of particles. The amount of transition metal included in the surface layer of the transition-metal-containing zeolite can be determined by XPS.

Specifically, in XPS, a monochromatic AlKα radiation (1486.7 eV) is used as an X-ray source, the takeoff angle is set to 45° with respect to the surface of the sample, and a neutralization gun is used. The molar proportions of atoms of the transition metal, Al, P, Si, and ○ included in the surface of the sample are determined by XPS and subsequently converted into weight proportions. Thus, the content (% by weight) of the transition metal is determined.

[Uses of Transition-Metal-Containing Zeolite]

Uses of the transition-metal-containing zeolites according to the present invention is not particularly limited. A transition-metal-containing zeolite according to the present invention is suitably used as an exhaust-gas purification catalyst and/or a water vapor adsorbent for vehicles because of its excellent water resistance, excellent high-temperature hydrothermal durability, and high catalytic activity.

<Exhaust Gas Treatment Catalyst>

For example, when a transition-metal-containing zeolite according to the present invention is used as an exhaust gas treatment catalyst, such as an automobile exhaust-gas purification catalyst, the transition-metal-containing zeolite may be directly used in the form of powder or may be mixed with a binder, such as silica, alumina, or clay mineral, and subjected to granulation or forming before use. A transition-metal-containing zeolite according to the present invention may be formed into a predetermined shape, preferably a honeycomb shape, by a coating method or a forming method.

In the case that a formed catalyst containing a transition-metal-containing zeolite according to the present invention is formed by a coating method, in general, a transition-metal-containing zeolite is mixed with an inorganic binder, such as silica or alumina, to prepare a slurry. The slurry is applied to a surface of a formed product made of an inorganic substance, such as cordierite, and is calcinated to yield the formed catalyst. Preferably, the slurry can be applied to a formed product of a honeycomb shape to form a honeycomb catalyst.

In general, a formed catalyst containing a transition-metal-containing zeolite according to the present invention is formed by mixing a transition-metal-containing zeolite with an inorganic binder, such as silica or alumina, or inorganic fiber, such as alumina fiber or glass fiber, shaping the mixture by an extrusion method or a compression method, and calcinating the mixture to yield the formed catalyst. Preferably, the mixture can be formed into a honeycomb shape to yield a honeycomb catalyst.

A catalyst containing a transition-metal-containing zeolite according to the present invention is effective as selectively reductive catalyst of NOx such as an automobile exhaust-gas purification catalyst for removing nitrogen oxides by contact with an exhaust gas containing nitrogen oxides. The exhaust gas may contain components other than nitrogen oxides, such as hydrocarbons, carbon monoxide, carbon dioxide, hydrogen, nitrogen, oxygen, sulfur oxides, and/or water. A known reducing agent, for example, hydrocarbon, or a nitrogen-containing compound, such as ammonia or urea, may be used. An exhaust gas treatment catalyst according to the present invention can remove nitrogen oxides contained in a wide variety of exhaust gases emitted from diesel cars, gasoline cars, and various diesel engines, boilers, and gas turbines for use in stationary power generation, ships, agricultural machinery, construction equipment, two-wheeled vehicles, and aircrafts, for example.

Although the contact conditions for a catalyst containing a transition-metal-containing zeolite according to the present invention and an exhaust gas are not particularly limited, the space velocity of the exhaust gas is generally 100 /h or more, preferably 1000 /h or more, and generally 500000 /h or less, preferably 100000 /h or less, and the temperature is generally 100°C or higher, preferably 150°C or higher, and generally 700°C or lower, preferably 500°C or lower.

<Water Vapor Adsorbent>

A transition-metal-containing zeolite according to the present invention has excellent water vapor adsorption and desorption characteristics.

The adsorption and desorption characteristics can vary with conditions. In general, a transition-metal-containing zeolite according to the present invention can adsorb water vapor from low temperature to high temperature at which it is commonly difficult to adsorb water vapor and from high humidity to low humidity at which it is commonly difficult to adsorb water vapor, and can desorb water vapor at a relatively low temperature of 100°C or less.

Such a water vapor adsorbent may be used in adsorption heat pumps, heat exchangers, and desiccant air conditioners.

A transition-metal-containing zeolite according to the present invention has excellent performance particularly as a water vapor adsorbent. A transition-metal-containing zeolite according to the present invention used as a water vapor adsorbent may be used in combination with a metal oxide, such as silica, alumina, or titania, a binder component, such as clay, or a thermal-conductive component. When a transition-metal-containing zeolite according to the present invention is used in combination with such a component, the transition-metal-containing zeolite content of a water vapor adsorbent is preferably 60% by weight or more, more preferably 70% by weight or more, still more preferably 80% by weight or more.

EXAMPLES

The present invention is described specifically with reference to Examples below. The present invention is not limited by Examples below as long as the summary of the present invention is not impaired.

Transition-metal-containing zeolites prepared in Examples and Comparative Examples below (hereinafter, referred to simply as "zeolites") were each analyzed and evaluated in terms of performance in the following manner.

[Evaluation Of Catalytic Activity At 200°C]

The zeolite samples prepared in Examples and Comparative Examples were each pressed into shape, pulverized, and filtered through a sieve to be formed into granules having a size of 0.6 to 1 mm. Into a normal-pressure, fixed-bed, flow-type reaction tube, 1 ml of the granules of each of the zeolite samples were charged. While a gas having the composition described in Table 1 was passed through the resulting zeolite layer at a space velocity SV of 100000/h, the zeolite layer was heated. After the NO concentration measured at the outlet of the reaction tube had become constant at 200°C, the purification performance (nitrogen oxide removal activity) of each zeolite sample was evaluated on the basis of

```
NO purification efficiency (%)

= {(Inlet NO Concentration) - (Outlet NO

Concentration)}/(Inlet NO concentration) × 100.
```

[Table 1]

| Gas constituent | Concentration |
|---|---|
| NO | 350ppm |
| $NH_3$ | 385ppm |
| $O_2$ | 15 volume% |
| $H_2O$ | 5 volume% |
| $N_2$ | Balance other than the above constituents |

[Measurement Of BET Specific Surface Area]

The specific surface areas of the zeolite samples prepared in Examples and Comparative Examples and the specific surface areas of the zeolites that had been subjected to the various tests described below were determined by measuring the BET specific surface areas of the zeolite samples by a flow single-point method with a fully automatic powder specific surface area measurement device (AMS1000) produced by Ohkura Riken Co., Ltd.

[Evaluation Of Retention Rate Of Specific Surface Area After Low-Temperature Water-Submersion Durability Test]

The zeolite samples prepared in Examples and Comparative Examples were each subjected to a low-temperature water-submersion durability test. Specifically, 2 g of each of the zeolite samples was dispersed in 8 g of water. The resulting zeolite slurries were each charged into a stainless autoclave including an inner cylinder made of a fluororesin, left to stand at 100°C for 24 hours, and filtered in order to collect a zeolite. The zeolites were dried at 100°C for 12 hours. The retention rate of the specific surface area of each zeolite was determined from the BET specific surface areas of the zeolite which were measured before and after the low-temperature water-submersion durability test by using the following formula.

Retention Rate of Specific Surface Area After Low-Temperature Water-Submersion Durability Test = (Specific Surface Area Measured After Test/Specific Surface Area Measured Before Test) × 100

[Evaluation Of Retention Rate Of Specific Surface Area After High-temperature Water-Vapor Durability Test]

The zeolite samples prepared in Examples and Comparative Examples were each subjected to a high-temperature water-vapor durability test. Specifically, each zeolite sample was subjected to a high-temperature water vapor treatment in which the zeolite sample was passed through water vapor (800°C, 10 volume%) for 5 hours in an atmosphere having a space velocity SV of 3000/h. The retention rate of the specific surface area of each zeolite was determined from the BET specific surface areas of the zeolite which were measured before and after the high-temperature water-vapor durability test by using the following formula.

Retention Rate of Specific Surface Area After High-Temperature Water-Vapor Durability Test = (Specific Surface Area Measured After Test/Specific Surface Area Measured Before Test) × 100

[XRF Measurement Of Copper Content In Entire Sample]

The copper content in each of the zeolite samples was determined by X-ray fluorescence analysis (XRF, under the following conditions).

Device: EDX-700 (SHIMADZU)
X-ray source: Rh target, 15 kV, 100 μA

[XPS Measurement Of Copper Content In Surface Of Sample]

The copper content in the surface of each of the zeolite samples was determined by X-ray photoelectron spectroscopy (XPS, under the following conditions).

Device: Quantum2000 (ULVAC-PHI)
X-ray source: Monochromatic AlKα radiation (1486.7 eV), 16 kV-34 W
Take-off angle: 45° with respect to the surface of the sample

Neutralization gun was used.

[XRD Measurement]

Measurement was made using samples prepared in the following manner under the conditions described below.

<Preparation Of Samples>

About 100 mg of each of the zeolite samples was crushed by man power with an agate mortar, and the amounts of samples were each controlled to be a specific amount by using sample holders having the same shape.

<Measurement Conditions>

X-ray source: Cu-Kα radiation
Output setting: 40 kV, 30 mA
Optical conditions for measurement:

Divergence slit = 1°
Scattering slit = 1°
Light-receiving slit = 0.2 mm
Diffraction peak position: 2θ (diffraction angle)
Measurement range: 2θ = 3 to 50 degrees
Scanning speed: 3.0° (2θ/sec), continuous scanning

A steam treatment was performed in Examples and Comparative Examples below in the following manner.

[Steam Treatment]

A stream treatment was performed under the following conditions with a continuous rotary kiln having a diameter of 6 cm and a length of 30 cm which was made of SUS316.

<Steam Treatment Conditions>

Rotation speed of rotary kiln: 1 rpm
Zeolite feeding rate: 1 g/min
Feeding of steam: Steam having a water vapor content of 10% by volume was fed to the kiln at a flow rate of 6 L/min
Setting of steam treatment temperature: the temperature of the zeolite contained in the rotary kiln was measured with a thermocouple at several positions and the highest temperature was considered to be a steam treatment temperature.

Steam treatment temperature and time: changed for each of Examples and Comparative examples as described in Table 2

[Example 1]

To 100 g of water, 81 g of 85-weight% phosphoric acid and 54 g of pseudo boehmite (containing 25 weight% of water, produced by Condea) were slowly added, and the resulting mixture was stirred for 1 hour. To the mixture, 6 g of fumed silica (AEROSIL 200, produced by Nippon Aerosil Co., Ltd.) and 100 g of water were added. The resulting mixture was stirred for 1 hour. To the mixture, 34 g of morpholine and 40 g of triethylamine were slowly added. The resulting mixture was stirred for 1 hour. Thus, a liquid A was prepared.

Apart from the preparation of the liquid A, a liquid B was prepared by dissolving 10 g of $CuSO_4 \cdot 5H_2O$ (produced by KISHIDA CHEMICAL Co., Ltd.) in 134 g of water, adding 8 g of tetraethylenepentamine (produced by KISHIDA CHEMICAL Co., Ltd.) to the resulting solution, and stirring the resulting mixture. The liquid B was slowly added to the liquid A, and the resulting mixture was stirred for 1 hour. Thus, an aqueous gel having the following composition was prepared.

<Composition Of Aqueous Gel (Molar Ratio)>

$SiO_2$: 0.25
$Al_2O_3$ : 1
$P_2O_5$: 0.875
CuO: 0.1
Tetraethylenepentamine: 1
Morpholine: 1
Triethylamine: 1
Water: 50

The aqueous gel was charged into a 1000-milliliter stainless autoclave including an inner cylinder made of a fluororesin and caused to react at 190°C for 24 hours (hydrothermal synthesis) while being stirred. After the hydrothermal synthesis had been terminated, cooling was performed, a supernatant liquid was removed by decantation, and a precipitate was collected. The precipitate was washed with water 3 times, subsequently filtered, and dried at 100°C. Subsequently, calcination was performed at 550°C for 6 hours in order to remove the template in a stream of an air (water vapor content: 0.5 volume% or less). Thus, a Cu-containing zeolite A-1 having a copper content of 3.8% by weight was prepared.

The Cu-containing zeolite A-1 was charged into a continuous rotary kiln (the effective volume of the rotary kiln was 3 times the apparent volume of the Cu-containing zeolite A-1) and treated with steam in an air atmosphere having a water vapor content of 10% by volume while being stirred at 750°C for 3 hours. Thus, a Cu-containing zeolite B-1 was prepared.

The Cu-containing zeolite B-1 was subjected to the various evaluations described above. Table 2 describes the results.

[Example 2]

A Cu-containing zeolite B-2 was prepared as in Example 1, except that the temperature at which the steam treatment was performed was changed to 800°C.

The Cu-containing zeolite B-2 was subjected to the various evaluations described above. Table 2 describes the results.

[Example 3]

A Cu-containing zeolite B-3 was prepared as in Example 1, except that the temperature at which the steam treatment was performed was changed to 850°C.

The Cu-containing zeolite B-3 was subjected to the various evaluations described above. Table 2 describes the results.

[Comparative Example 1]

A Cu-containing zeolite A-1 having a copper content of 3.8% by weight which was prepared as in Example 1 was used as a Cu-containing zeolite X-1 of Comparative Example 1. Table 2 describes the results of evaluations of the Cu-containing zeolite X-1.

[Comparative Example 2]

The Cu-containing zeolite A-1 prepared in Comparative Example 1 was deposited on an alumina dish such that the resulting layer of the Cu-containing zeolite A-1 had a thickness of 20 mm and calcined at 800°C for 3 hours in an air atmosphere having a water vapor concentration of 10% by volume. Thus, a Cu-containing zeolite X-2 of Comparative Example 2 was prepared. Table 2 describes the results of evaluations of the Cu-containing zeolite X-2.

[Comparative Example 3]

To 100 parts by weight of the Cu-containing zeolite A-1 prepared in Comparative Example 1, 300 parts by weight of pure water and 0.2 parts by weight of calcium acetate monohydrate (produced by KISHIDA CHEMICAL Co., Ltd.) were added. The resulting mixture was stirred to form a slurry. The slurry was dried on a metal plate heated at 150°C while being stirred. Subsequently, calcination was performed at 500°C for 3 hours in a stream of an air (water vapor content: 0.5 volume% or less). Thus, a Cu-containing zeolite X-3 on which 0.2% by weight of calcium was supported was prepared. Table 2 describes the results of evaluations of the Cu-containing zeolite X-3.

[Comparative Example 4]

A Cu-containing zeolite X-4 was prepared as in Example 1, except that the temperature at which the steam treatment was performed was changed to 700°C. Table 2 describes the results of evaluations of the Cu-containing zeolite X-4.

[Comparative Example 5]

A Cu-containing zeolite X-5 was prepared as in Example 1, except that the temperature at which the steam treatment was performed was changed to 900°C. Table 2 describes the results of evaluations of the Cu-containing zeolite X-5.

[Table 2]

| | Steam treatment | | XRD | Uppermost surface/inside transition metal ratio※ | NO purification efficiency (%) | Specific surface area retention rate (%) | |
|---|---|---|---|---|---|---|---|
| | Treatment temperature (°C) | Stirring | Structure | | | After low-temperature water-submersion durability test | After high-temperature water-vapor durability test |
| Example 1 | 750 | Yes | CHA | 1.21 | 94 | 29 | 92 |
| Example 2 | 800 | Yes | CHA | 1.39 | 96 | 38 | 91 |
| Example 3 | 850 | Yes | CHA | 1.82 | 90 | 51 | 94 |
| Comparative example 1 | No steam treatment | | CHA | 1.03 | 94 | 4 | 85 |
| Comparative example 2 | 800 | No | CHA (partially destroyed) | 1.08 | 90 | 16 | 88 |
| Comparative example 3 | No steam treatment (Ca deposited) | | CHA | 1.04 | 92 | 41 | 30 |
| Comparative example 4 | 700 | Yes | CHA | 1.03 | 87 | 3 | 90 |
| Comparative example 5 | 900 | Yes | Zeolite structure destroyed | - | 8 | - | - |
| ※ Amount of transition metal determined by XPS/amount of transition metal determined by XRF | | | | | | | |

The results described in Table 2 confirm that the transition-metal-containing zeolites according to the present invention, which were prepared in Examples 1 to 3, were excellent compared with the zeolites prepared in Comparative Examples 1 to 5 in terms of zeolite structure, purification performance, low-temperature water-submersion durability, and high-temperature water-vapor durability.

The zeolite prepared in Comparative Example 1, which had not been subjected to the steam treatment, had poor low-temperature water-submersion durability and insufficient high-temperature water-vapor durability. In Comparative Example 2, where the zeolite was exposed to steam conditions but stirring was not performed, a part of the zeolite structure was destroyed since the treatment was not performed uniformly. The low-temperature water-submersion durability of the zeolite prepared in Comparative Example 2 was still poor although it was improved compared with the zeolite prepared in Comparative Example 1. The high-temperature water-vapor durability of the zeolite prepared in Comparative Example 2 was also at an insufficient level.

The zeolite prepared in Comparative Example 3, which had not been subjected to the steam treatment but on which Ca was disposed, had improved low-temperature water-submersion durability but considerably poor high-temperature water-vapor durability.

In Comparative Example 4, where the zeolite had been subjected to the steam treatment while being stirred but the treatment was performed at a low temperature, the high-temperature water-vapor durability of the zeolite was slightly improved compared with the zeolite prepared in Comparative Example 1 which had not been subjected to the steam treatment. However, the low-temperature water-submersion durability of the zeolite prepared in Comparative Example 4 was comparable to that of the zeolite prepared in Comparative Example 1.

In Comparative Example 5, where the steam treatment temperature was excessively high, the zeolite structure was destroyed and the performance of the zeolite was degraded.

Although the present invention has been described in detail with reference to particular embodiments, it is apparent to a person skilled in the art that various modifications can be made therein without departing from the spirit and scope of the present invention.

The present application is based on Japanese Patent Application No. 2014-064053 filed on March 26, 2014, which is incorporated herein by reference in its entirety.

## Claims

1. A method for producing a transition-metal-containing zeolite, the method comprising a steam treatment step in which a transition-metal-containing zeolite is stirred at 710°C or more and 890°C or less in the presence of water vapor, the transition-metal-containing zeolite containing a transition metal in a zeolite comprising at least silicon atoms phosphorus atoms, and aluminium atoms in a framework sturucture.

2. The method for producing a transition-metal-containing zeolite according to Claim 1, wherein the steam treatment is performed at 750°C or more and 850°C or less.

3. The method for producing a transition-metal-containing zeolite according to Claim 1 or 2, wherein the transition metal is copper.

4. The method for producing a transition-metal-containing zeolite according to any one of Claims 1 to 3, wherein the steam treatment is performed in an atmosphere having a water vapor concentration of 1% by volume or more.

5. The method for producing a transition-metal-containing zeolite according to any one of Claims 1 to 4, wherein the steam treatment is performed for 0.1 hours or more and 72 hours or less.

6. The method for producing a transition-metal-containing zeolite according to any one of Claims 1 to 5, wherein the transition-metal-containing zeolite is stirred by using at least one selected from a stirrer having an axis, a stirrer that does not have an axis, a stirrer connected to a tank, and a fluid.

7. The method for producing a transition-metal-containing zeolite according to any one of Claims 1 to 6, wherein the content of the transition metal in the transition-metal-containing zeolite is 0.1% by weight or more and 30% by weight or less.

8. The method for producing a transition-metal-containing zeolite according to any one of Claims 1 to 7, wherein the Si content in the transition-metal-containing zeolite satisfies Formula (I):

$$0.01 \leq x \leq 0.5 \ ... \ (I),$$

wherein x represents the ratio of the number of moles of the silicon atoms to the total number of moles of the silicon atoms, the aluminium atoms, and the phosphorus atoms included in the framework structure.

9. The method for producing a transition-metal-containing zeolite according to any one of Claims 1 to 8, wherein the transition-metal-containing zeolite has a zeolite structure having a framework density of 10.0 T/1000 Å$^3$ or more and 16.0 T/1000 Å$^3$ or less, the zeolite structure being defined by the International Zeolite Association (IZA).

10. The method for producing a transition-metal-containing zeolite according to any one of Claims 1 to 9, wherein the transition-metal-containing zeolite has a zeolite structure CHA, the zeolite structure being defined by the International Zeolite Association (IZA).

11. The method for producing a transition-metal-containing zeolite according to any one of Claims 1 to 10, wherein the transition-metal-containing zeolite that is to be subjected to the steam treatment is a transition-metal-containing zeolite prepared by hydrothermal synthesis in the presence of a transition metal raw material.

12. The method for producing a transition-metal-containing zeolite according to Claim 11, wherein the transition-metal-containing zeolite that is to be subjected to the steam treatment is a transition-metal-containing zeolite prepared by hydrothermal synthesis in the presence of the transition metal raw material and a polyamine represented by General Formula $H_2N\text{-}(C_nH_{2n}NH)_x\text{-}H$ (where n is an integer of 2 to 6 and x is an integer of 2 to 10).

13. A transition-metal-containing zeolite produced by the method according to any one of Claims 1 to 12.

14. A transition-metal-containing zeolite that has been subjected to a steam treatment, the transition-metal-containing zeolite containing a transition metal in a zeolite having a framework structure including silicon atoms, phosphorus atoms, and aluminium atoms, the ratio of the concentration of the transition metal in an uppermost surface of the transition-metal-containing zeolite to the concentration of the transition metal in the entire transition-metal-containing zeolite, that is, the ratio of the content of the transition metal determined by XPS to the content of the transition metal determined by XRF, being 1.05 to 3.00.

15. An exhaust gas purification catalyst comprising the transition-metal-containing zeolite according to Claim 13 or 14.

## INTERNATIONAL SEARCH REPORT

| International application No. |
| --- |
| PCT/JP2015/055832 |

A. CLASSIFICATION OF SUBJECT MATTER
*C01B39/54*(2006.01)i, *B01D53/94*(2006.01)i, *B01J20/18*(2006.01)i, *B01J29/85*(2006.01)i, *B01J37/04*(2006.01)i, *B01J37/10*(2006.01)i

According to International Patent Classification (IPC) or to both national classification and IPC

B. FIELDS SEARCHED

Minimum documentation searched (classification system followed by classification symbols)
C01B37/00-39/54, B01J21/00-38/74, B01D53/94, B01J20/18

Documentation searched other than minimum documentation to the extent that such documents are included in the fields searched
| | | | |
| --- | --- | --- | --- |
| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>A | JP 2013-032268 A (Mitsubishi Plastics, Inc.),<br>14 February 2013 (14.02.2013),<br>claims 1, 11, 18; paragraphs [0001], [0073] to<br>[0076], [0090], [0091], [0106]<br>& JP 2013-220969 A      & US 2013/0266785 A1<br>& WO 2013/002059 A1      & EP 2724983 A1<br>& CN 102847553 A | 14,15<br>1-13 |
| X<br>A | WO 2010/084930 A1 (Mitsubishi Chemical Corp.),<br>29 July 2010 (29.07.2010),<br>claims 1, 2, 7, 24; paragraphs [0021], [0022],<br>[0026] to [0028], [0200]<br>& JP 2015-013287 A      & US 2012/0020875 A1<br>& US 2012/0028789 A1      & US 2013/0005563 A1<br>& EP 2380663 A1      & CN 102292156 A | 14,15<br>1-13 |

☒ Further documents are listed in the continuation of Box C. ☐ See patent family annex.

| | | | |
| --- | --- | --- | --- |
| \* | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 13 May 2015 (13.05.15) | 26 May 2015 (26.05.15) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
| --- | --- |

Form PCT/ISA/210 (second sheet) (July 2009)

**INTERNATIONAL SEARCH REPORT**

| International application No. |
| --- |
| PCT/JP2015/055832 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X<br>A | JP 2011-510899 A  (BASF Corp.),<br>07 April 2011 (07.04.2011),<br>claims 1, 10 to 12; paragraphs [0027], [0028],<br>[0031], [0036], [0037]; example 1<br>& JP 2014-139440 A       & US 2009/0196812 A1<br>& US 2011/0300028 A1     & US 2011/0300042 A1<br>& WO 2009/099937 A1      & CN 101983103 A | 14,15<br>1-13 |
| X<br>A | JP 2012-522636 A  (BASF Corp.),<br>27 September 2012 (27.09.2012),<br>claims 1, 3, 5; paragraphs [0072], [0074],<br>[0075], [0083], [0084]; example 3<br>& US 2011/0173950 A1     & US 2014/0047819 A1<br>& US 2014/0248200 A1     & WO 2010/114873 A2<br>& CN 102387851 A | 14,15<br>1-13 |
| X<br>A | JP 2013-514257 A  (PQ Corp.),<br>25 April 2013 (25.04.2013),<br>claims 1, 4, 13, 17, 26, 30; paragraphs [0017],<br>[0025], [0028], [0045] to [0060], [0065],<br>[0077]; table 2<br>& JP 2010-522688 A       & JP 2011-167690 A<br>& US 2010/0092362 A1     & US 2008/0241060 A1<br>& US 2010/0092361 A1     & WO 2011/084218 A2<br>& WO 2008/118434 A1      & EP 2246111 A2<br>& EP 2517790 A2          & CA 2784736 A1<br>& CA 2681135 A1          & CN 102844096 A<br>& CN 101674885 A         & CN 102319584 A | 14,15<br>1-13 |
| X<br>A | JP 2010-524677 A  (Johnson Matthey PLC),<br>22 July 2010 (22.07.2010),<br>claims 1, 9 to 13, 21 to 23, 27, 28; paragraphs<br>[0035], [0036], [0047] to [0049]; examples<br>& JP 2015-027673 A       & US 2010/0290963 A1<br>& US 2011/0250127 A1     & US 2012/0301378 A1<br>& WO 2008/132452 A2      & EP 2517773 A2<br>& EP 2517774 A2          & EP 2517775 A2<br>& CA 2685009 A1          & KR 10-2010-0017347 A<br>& CN 101730575 A         & CN 102974390 A<br>& CN 102974391 A | 14,15<br>1-13 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012279807 A
- WO 2013082550 A
- JP 2013032268 A
- JP 2014064053 A

**Non-patent literature cited in the description**

- ATLAS OF ZEOLITE FRAMEWORK TYPES. 2001